# EUROPEAN PATENT APPLICATION

(11) **EP 0 982 678 A2**
(43) Date of publication of application: **01.03.2000**
(21) Application number: 99115143.2
(22) Date of filing: 11.08.1999
(51) Int. Cl.: G06K 11/16, G06F 3/033

(54) **Digitizer tablet with active and boundary areas**

(30) Priority: 27.08.1998 US 141509
(71) Applicant: Wacom Co., Ltd., Saitama-ken 349-1148 (JP)
(72) Inventor: Pollmann, Konrad W., Vancouver, 98682 Washington (US); Fleck, David C., Vancouver, 98665 Washington (US); Katsurahira, Yuji, Kazo-shi, Saitama 347-0016 (US)
(74) Representative: Paul, Dieter-Alfred, Dipl.-Ing.

(57) **Abstract**

A digitizer tablet includes an active area as well as border area(s) which are adjacent to and/or surround the active area. Useful coordinate data (e.g. coordinate data as to only one of the x and y directions) of a pointer taken from border areas is reported to a corresponding computer and/or display screen as if the coordinate data was taken or near at the edge of the active area on the tablet. This effectively enlarges the surface area on the tablet which may be utilized by a user to select scroll items, menu items, and other selectable areas which appear at or near edges of the corresponding display screen.

## Description

This invention relates to a digitizer apparatus, and corresponding method, which utilizes position information of the pointer (e.g. stylus, mouse or puck) detected when the pointer is outside of the active area of a digitizer tablet. More particularly, this invention relates to a digitizer apparatus, and corresponding method, for reporting pointer coordinates detected in a border area outside of the tablet's active area as if the coordinates were detected within or at an edge of the active area. This enables, for example, peripheral selectable areas appearing near edge(s) of a corresponding display screen to be proportionally enlarged on the digitizer tablet and thus more easily selectable by a user.

### BACKGROUND OF THE INVENTION

Digitizer tablets for inputting information to corresponding computer displays are known in the art. For example, see commonly owned U.S. Patent Nos. 4,878,553; 5,028,745; and 5,793,360, the disclosures of which are hereby incorporated herein by reference. See also commonly owned U.S. Patent Application Serial No. 09/105,217, filed 6/26/98, the disclosure of which is hereby incorporated herein by reference. Such digitizers enable graphic artists and others to write (e.g. draw pictures or form characters by moving the digitizer pointer) on a corresponding display.

Digitizer tablets are typically in communication with a corresponding computer display and are used as follows. The user manipulates (i.e. moves) a pointer (e.g. stylus, mouse, or cursor) on or over the tablet with the cursor (e.g. arrow or hour glass shaped) on the corresponding display moving along with the pointer. The cursor shown on the display is located on the screen at the same location as the pointer is located on the tablet. For example, if the pointer is positioned by the user in the center of the digitizer tablet, then the corresponding cursor appears at the center of the display screen. Likewise, if the pointer is positioned by the user in the lower left hand corner of the tablet, then the cursor appears at the lower left hand corner of the display screen. Movement of the cursor on the display, and selection of menu or scroll items, also corresponds to movement of the pointer on the tablet and clicking of the pointer device, respectively.

Digitizer tablets include an active area in which coordinate data, or position, (i.e. x, y coordinates) of the pointer on the tablet is determined to at least a predetermined degree of accuracy. It is not possible to determine x, y pointer position on the tablet to such a high degree of accuracy outside of the active area. Thus, in conventional digitizers, when the pointer is determined to be outside of a predetermined active area, coordinate data is no longer reported by the tablet and the cursor on the corresponding display screen cannot be moved along with the pointer.

In certain digitizers, the active area of the tablet includes an array of x direction conductors and an array of y direction conductors located beneath the tablet's work surface (the x and y conductors are perpendicular to one another). Pointer position on the tablet is determined by interpolating between adjacent conductors in the x and/or y directions using signal information from a number of parallel conductors (e.g. see the aforesaid '553 and '745 patents). However, near the edge or border areas of the x and/or y conductor arrays, there may be a point beyond which there are not enough conductors to interpolate to the predetermined degree of accuracy desired in both the x and y directions. Such edge or border areas are thus outside of the tablet's active area, and are not typically used for determining and reporting precise pointer x, y coordinate location on the tablet.

Many application programs (e.g. MS Word, MS Excel, etc.) provide the user with a scroll bar located on the right side of the display screen so that the user can scroll upward or downward in a particular document or file. Often, the scroll bar may include a first small box including an upwardly pointing arrow, a second small box including a downwardly pointing arrow, and a third slideable box positioned on the scroll bar between the first and second boxes. The third scroll box indicates the relative position of the currently displayed portion of the document or file on the display relative to the entire length of the document/file. To scroll upward, the user manipulates the pointer on the digitizer tablet until the corresponding cursor on the display screen appears over or in the first small box having the upwardly pointing arrow. The user then clicks the pointer using a side switch, pressure actuated tip switch, or the like. Such clicking, like clicking of a mouse, causes upward scrolling to begin in a known manner. Downward scrolling is carried out in a similar manner with the user selecting or clicking instead on the second small box having the downward pointing arrow. Typically, this kind of scrolling scrolls line by line. For page by page scrolling, or even line by line scrolling, the user can click in the scroll bar between the first and third boxes for scrolling upward or between the second and third boxes for scrolling downward. The user may also scroll by positioning the display screen cursor over the third box, initiating and holding a click with the pointer while over the area on the tablet corresponding to the third box, and moving the pointer (with the third box) up or down to adjust the currently displayed portion of the document/file up or down. After reaching the desired spot in the document/file, the user releases the click on the pointer.

When typical digitizer tablets are used in conjunction with such application programs and operating systems, the thin/small scroll bar located on the right hand edge of the computer display screen corresponds to a proportionally thin/small area located at or near the right hand edge of the tablet's active area. Thus, for a user to scroll on the display, the user must position the pointer within this thin/small area or box near the edge of the tablet's active area. When a 4 inch by 5 inch tablet is being used, for example (which is typically smaller than even the display screen), the two small scroll boxes can be very small and difficult to locate with the pointer. Due to their small sizes, it can often take the user an undesirably long period of time to position the pointer in the scroll box and/or menu box areas on the tablet. Then the user has to maintain the pointer in this small area while clicking. In addition to the potential for wasting time, this can sometimes also result in the user clicking on undesired boxes or items.

Additionally, when scrolling with the third or sliding scroll box, the user has to move the pointer vertically within this small strip of active area on the tablet - if the tablet reports that the pointer has left the active tablet area the scrolling will stop and the user has to re-acquire the third box to continue scrolling. The area on the tablet useable for scrolling is thus undesireably small.

U.S. Patent No. 4,992,630 discloses a digitizer tablet with menus positioned over marginal areas in non-linear boundaries of the tablet's electrode array. Unfortunately, the tablet of the '630 patent does not address or solve any of the problems outlined above. In the '630 patent, the menu areas are used to change proximity and pressure thresholds. However, the user in the '630 patent cannot use the menu areas for the purpose of reporting pointer coordinate information during writing or selecting of items on the display. Specifically, coordinates determined in the menu areas in the '630 patent "are not outputted from the tablet, but are used to adjust parameters of the signal processing circuitry." See col. 4, lines 44-49 of the '630 patent. Still another problem with the system of the '630 patent is that it requires the pointer to be physically connected to the tablet. Furthermore, the linear/non-linear technology of the '630 patent is not applicable to certain preferred types of digitizers.

Further, many operating systems (e.g. Mac OS 8, Windows '95 or NT 4) have specific menu function buttons positioned along the edge of the display screen. In the Windows version, the "task bar" can be set to "auto hide" and it will disappear from the display screen whenever the user does not need it. To bring it back to the screen from its "hiding place" the user has to position the screen cursor exactly on the edge of the display screen. With a conventional digitizer, accessing an auto-hiding task bar is very challenging for a user because the user has to position the pointer exactly on the edge of the screen - typically represented by a small single line of pixels along the edge of the tablet's active area.

Another problem with conventional digitizers is that quickly drawn pointer strokes on the tablet extending to the edge of the active area often do not show up on the corresponding display screen as extending to the edge thereof (i.e. a drawn line stops short of the edge/border of the display). This is because some fast pointer strokes may only have pointer coordinates reported every one-half inch or so, as a function of the speed of the stroke. Thus, near the edge of a conventional tablet's active area, a user needs to write/draw slowly so that the tablet reports pointer coordinate data near the edge of the active area, and so that pointer coordinate data or a drawn line (e.g. paint stroke) does not stop 0.5 inches short of the edge of the active area or display screen. This is problematic in that the user cannot use natural strokes to write/draw on the tablet. Past pointer strokes are often desired by artists, for example.

It is apparent from the above that there exists a need in the art for making it easier for digitizer tablet users to select small areas on corresponding computer display screens such as scroll bars/boxes, menu items, and the like. There also exists a need in the art for expanding the proportional area on a digitizer tablet which may be used to select menu items, scroll boxes/bars, and other selectable items which appear near or at edges/borders of a corresponding display screen. There also exists a need in the art for enabling fast pointer strokes performed by a user on a tablet to be illustrated on a corresponding display as extending all the way to an edge thereof.

It is a purpose of this invention to fulfill the above described needs in the art, as well as other needs in the art which will become more apparent to the skilled artisan once given the following disclosure.

### SUMMARY OF THE INVENTION

It is an object of this invention to expand the area on a digitizer tablet within which a pointer (e.g. stylus, mouse, or puck) can be positioned to select an item or area located near/along an edge or border of a corresponding display screen.

It is an object of this invention to expand the proportional area on a digitizer tablet within which a pointer can be positioned to select a scroll bar/box or menu item located near or at an edge or border of a corresponding display screen.

It is an object of this invention to report/output at least some pointer coordinate data detected in a border or peripheral area outside of the tablet's active area, to a corresponding computer or display as if the data was taken, or detected at an adjacent edge of the tablet's active area, thereby enlarging the proportional area the tablet which may be used to select items appearing near an edge of the display.

It is an object of this invention to report/output pointer coordinate data taken or detected in a border or peripheral area outside of the tablet's active area, to a corresponding computer as if it was detected at the edge of the tablet's active area, thereby effectively enlarging the useable area on the tablet so that fast pointer strokes performed on the tablet by a user may extend all the way to the edge of the display screen.

Generally speaking, this invention fulfills the above-described needs in the art by providing a method of using a digitizer tablet, the method comprising the steps of:
providing a digitizer tablet including an active area and at least one border area that is located outside of but adjacent to the active area;
providing a display with which the digitizer tablet is in operative communication;
providing a pointer which a user manipulates over or on the tablet;
moving the pointer over or on the tablet, the tablet detecting coordinate information of the pointer relative to the tablet;
moving a cursor or drawing a line on the display in a manner corresponding to movement of the pointer over on the tablet; and
utilizing, on the display, at least some pointer coordinate data detected in the border area as if the pointer coordinate data detected in the border area was detected within the active area.

This invention will now be described with respect to certain embodiments thereof, along with reference to the accompanying drawings, wherein:

### IN THE DRAWINGS

Figure 1 is a functional block diagram illustrative of an embodiment of this invention wherein the tablet driver, operating system, and application program are disposed in the computer with which the digitizer tablet and pointer are in communication.
Figure 2 is a schematic/circuit diagram of circuitry of the digitizer tablet of Figure 1, illustrating overlapping loop coils in the tablet extending in each of the x and y directions.
Figure 3 is a perspective view of the stylus pointer of Figure 1 to be used with the digitizer tablet of Figure 2.
Figure 4 is a variable circuit used for causing the erasing tip of the Figure 3 stylus to emit an erasing frequency at different phases according to certain embodiments of this invention.
Figure 5 illustrates a tuning circuit to be used for causing the writing tip of the Figure 3 stylus to emit different writing frequencies and phases according to an embodiment of this invention.
Figure 6 is a top view of a digitizer tablet according to the Figure 1-5 embodiment of this invention, wherein the tablet includes a menu strip area thereon in which the pointer may be manipulated to select menu items.
Figure 7 illustrates the locations of peripheral border areas adjacent to the active area of the tablet of Figs. 1-2 according to an embodiment of this invention.
Figure 8 illustrates a Windows™/Microsoft Word™ screen being displayed on a computer display, this screen including a scroll bar and scroll boxes on the right hand side thereof near the edge of the screen which may be more easily selected using certain embodiments of this invention.
Figure 9 illustrates a windows '95 (98 or NT) screen, including a plurality of icons near the left edge thereof which can be more easily selected using embodiments of this invention.
Figure 10 illustrates a Windows screen, including a plurality of items on a task bar along the top edge thereof which can be more easily selected using embodiments of this invention. If the task bar is set to auto-hide, then it can be made to appear more easily using embodiments of this invention.
Figure 11 illustrates a Windows '95 (98 or NT) screen, including a plurality of icons and items on a task bar near the left edge thereof which can be more easily selected using embodiments of this invention. If the task bar is set to auto-hide, then it can be made to appear more easily using embodiments of this invention.
Figure 12 illustrates a Windows screen, including a plurality of selectable items on a task bar near the bottom edge thereof which can be more easily selected using embodiments of this invention [this is the default position of the Windows '95 task bar]. If the task bar is set to auto-hide, then it can be made to appear more easily using embodiments of this invention.
Figure 13 illustrates a display screen portraying a line (e.g. paint stroke) drawn with a digitizer pointer in accordance with an embodiment of this invention, as compared to a potential conventional digitizer stroke that may be cut short.
Figure 14 illustrates a display screen showing a control panel which can be used by a user to change the portion of the display screen which corresponds with or coincides with the active area of the digitizer tablet with which the display is in communication.

### DETAILED DESCRIPTION OF CERTAIN EMBODIMENTS OF THIS INVENTION

Referring now more particularly to the accompanying drawings in which like reference numerals indicate like parts throughout the several views.

Digitizer systems according to certain embodiments of this invention include a tablet, a pointer, and a corresponding computer having a display. Movement of the pointer over or on the tablet is detected and a corresponding cursor moves, or a line is drawn, on the computer's display. This enables the user to work on a computer (e.g. draw pictures, write text, etc.) by using the pointer in conjunction with the digitizer tablet.

Areas on the tablet represent corresponding proportional areas on the display. Thus, introducing the pointer onto the tablet at the lower left hand corner thereof and moving it from that point laterally to the right across the tablet to a point in the lower right hand corner thereof may result in a line being drawn (or a cursor being moved) on the display from the lower left hand corner thereof across the display to a proportional point in the lower right hand corner of the display.

According to certain embodiments of this invention, coordinates of an electronic pointer (e.g. stylus, mouse, puck, etc.) on a tablet taken/detected in a border area outside of the active area are reported or output to a corresponding computer or display as if they were taken within (e.g. at the closest adjacent edge of) the active area. In such a manner, the useable area of the digitizer tablet is enlarged, and the area on the tablet which corresponds to borders or edges of the corresponding display screen is proportionally enlarged. Thus, it is much easier for the user to select (e.g. click on) items (e.g. menu items, scroll bars/boxes, start boxes, etc.) which appear along or near edge(s) of the display screen because the corresponding areas on the tablet are larger than in the prior art and proportionally larger than the selectable item areas appearing on the display.

The areas on the tablet which correspond to the border or periphery of the display are proportionally enlarged relative to other tablet areas in the tablet's active area.

According to another embodiment or use of this invention, pointer coordinate data (x and/or y pointer coordinates) taken in a border or peripheral area outside of the tablet's active area is output or reported to a corresponding computer and/or display as if it was taken at or near the edge of the tablet's active area, so that fast pointer strokes on the tablet by a user may extend all the way to the edge of the display.

According to another embodiment of this invention, pointer coordinate data taken in a border area or peripheral area outside of the tablet's active area is output or reported by the tablet to a corresponding computer and/or display as it the tablet would actually extend that far laterally or vertically. These inaccurate coordinates are then clipped in the driver of the operating system (OS) so that the coordinate data reported from the border area(s) is used to position the pointer at or along the edge of the screen display. This has a similar effect as the previous embodiment, but a difference is that the clipping of the coordinate data from the border area is done in the driver or the OS, and not in the tablet processor's firmware.

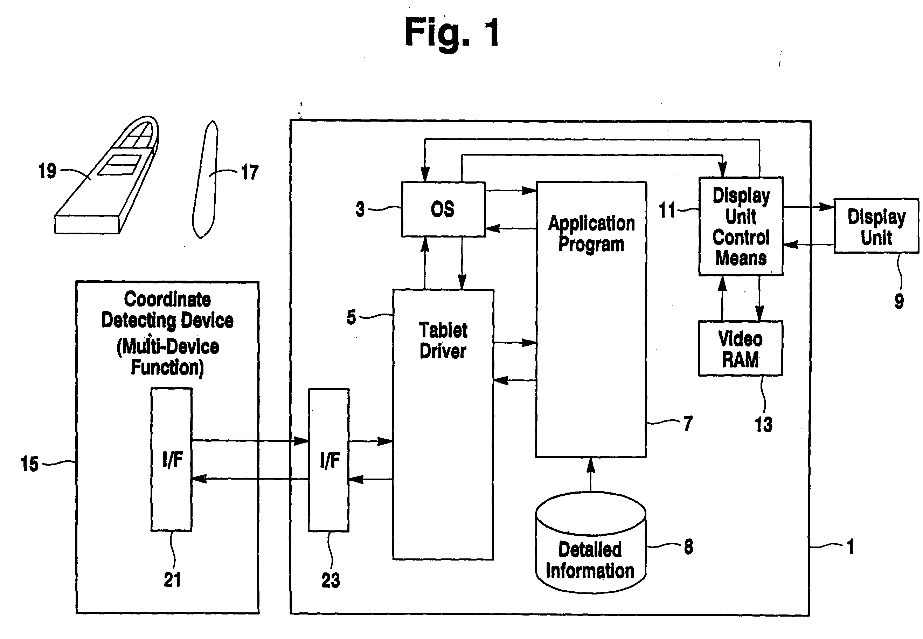

Figure 1 is a functional block diagram illustrative of an exemplar digitizer system according to an embodiment of this invention, this figure schematically illustrating the functions implemented by the CPU of computer 1. Either software or hardware may be used to carry out the various functions described and shown herein.

Computer 1 (such as a Macintosh with 680XX processor, or any other PC) includes typical computer components including a CPU (not shown), buses (not shown) connected to the CPU, and a memory (e.g. hard drive, or any other type of magnetic or electronic memory). Stored in the memory are an operating system (OS) 3, tablet driver 5, application program 7, and the like. The memory also may contain driver settings which could, for example, detail how the pointer coordinate, tilt, and switch data that the tablet reports are passed on to the OS and the application. The CPU implements application program 7, along with operating system 3 and driver 5 by executing the required programs in accordance with particular situations. The processing of application program 7 along with operating system (OS) 3 and tablet driver 5 is shown on corresponding computer display 9 primarily by way of display unit controller 11 and video RAM 13, with OS 3 being in communication with controller 11 and RAM 13 for loading driver software into RAM 13. RAM 13 is accessed by controller 11 to refresh display screen 9 image. Display 9 typically has hundreds of rows and columns of pixels extending in x and y directions.

Coordinate detecting digitizer tablet 15 detects the position(s) of electronic pointer (stylus 17 and/or cursor/puck 19) along with the pointer's corresponding switch state(s). The switch state of each pointer may be communicated from the pointer to the tablet by way of digital code signals and/or alternatively by way of varying frequencies or varying phases of analog signal(s) sent from the pointer to the tablet. Exemplary methods and systems utilized for detecting the position and switch states of pointing devices 17 and 19 by tablet 15 and computer 1 are disclosed in U.S. Patent Nos. 4,878,553, 5,028,745, and 4,999,461, and U.S. Serial Nos. 08/388,265 and 08/352,133, the disclosures of which are all hereby incorporated herein by reference. By manipulating the switches on the pointer(s), the user may select menu items, scroll items, or other items shown on display 9 by positioning the pointer on tablet 15 over the corresponding tablet area and actuating the appropriate selecting pointer switch.

Tablet 15 and computer 1 are connected and in communication by way of interface 21 of tablet 15 and interface 23 of computer 1. Application program 7 may or may not use all the data supplied by tablet 15 and pointer 17, 19 according to different embodiments of this invention. OS 3 is software such a Macintosh OS 8 (trademark of Apple Computer), WINDOWS '95, WINDOWS '98, or WINDOWS NT 4 (trademarks of Microsoft, Inc.). Any conventional Macintosh or other PC type OS will also suffice. Application program 7 refers to conventional database software, graphics software, spreadsheet software, CAD software, and word processor software. Microsoft WORD™, Excel™, PowerPoint™, MetaCreations Dabbler™, MetaCreations PAINTER™, Adobe Photoshop™, Macromedia Freehand™, Autodesk AutoCAD™, WordPerfect™, and LOTUS 1-2-3™ are exemplary application programs which may be used in different embodiments of this invention. Application program 7 may or may not be designed for use with tablet 15 and pointer(s) according to different embodiments of this invention. For example, MetaCreations PAINTER utilizes high resolution coordinate data, tip pressure data, and tilt data to influence the appearance of painted stokes which appear on the display screen due to pointer manipulation by the user. Both may be used as program 7.

Tablet driver 5 is typically provided for the user by the manufacturer of the device 15. Driver 15 is often a program installed in computer 1 (via floppy disc or optical disc, for example) for the purpose of transferring coordinate information, switch information, and other detailed information from tablet 15 to OS 3 of application interface layer (API) or application program 7. This transfer includes not only the active transfer of data but also passive transfer which enables program 7 or the like to obtain data. Since these three programs are software or firmware, it is possible to incorporate a part of each of their functions in other programs. For example, all functions of driver 5 could be included in program 7.

When an operator or user performs coordinate input by way of erasing/writing pointer 17, 19, the operator visually checks the content shown on display 9. The interactive input is primarily governed by program 7. Taking the pointing input in a graphic processor (CAD) as an example, if a pointed to position is in a drawing or working area of the tablet 15, then program 7 displays the pointer indicating the pointed-to position (e.g. via a cursor shape such as an arrow or cross) on display screen 9. Other cursor shapes may of course be used on the display screen 9.

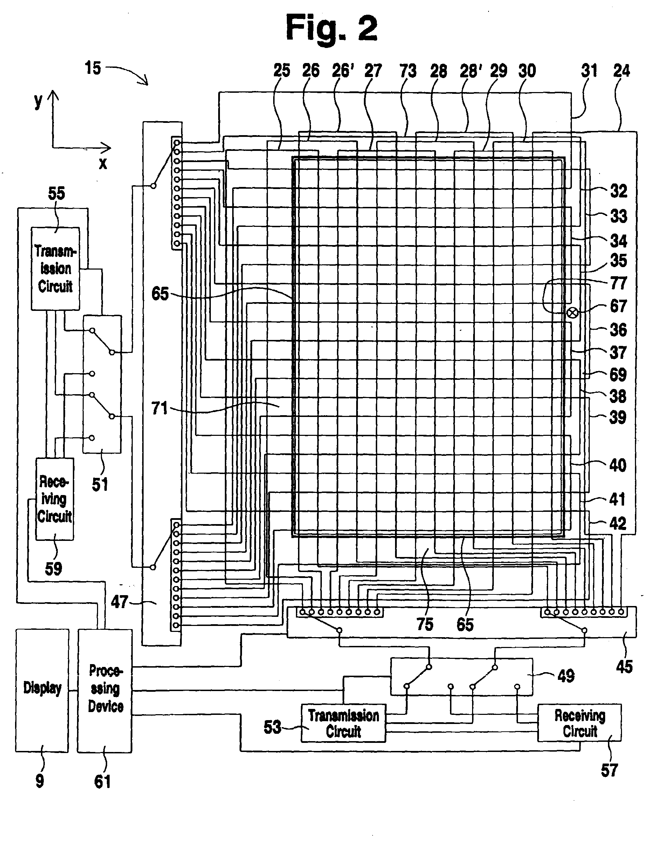

Figure 2 illustrates circuitry in digitizer tablet 15 for detecting x, y pointer coordinate values relating to the position of pointer 17, 19 on tablet 15. As illustrated, within a housing of the digitizer tablet there is provided an array of x-direction conductors and an array of y-direction conductors, with the x and y direction conductors being approximately orthogonal relative to one another. In the Figure 2 embodiment, the x-direction position detecting system includes a plurality of parallel overlapping conductive loop coils 24-30 (including 26' and 28'), while the y-direction position detecting system includes a plurality of parallel overlapping conductive loop coils 31-42. In certain embodiments, loop coils 24-30 may detect electromagnetic waves from the pointer and thus pointer position in the x direction, while loop coils 31-42 may detect electromagnetic waves from the pointer and thus pointer position in the vertical or y direction. The result is a coordinate location (x, y) of the pointer. Although Figure 2 shows a particular number of overlapping loops coils in each of the x and y directions, it will be understood by those of skill in the art that any number of such loop coils may be provided in each direction, as a function of the size of tablet 15 and the resolution at which it is desired to detect pointer position.

Still referring to Figure 2, tablet 15 further includes x-direction selection circuit 45, y-direction selection circuit 47, x-direction connection switching circuit 49, y-direction connection switching circuit 51, x-direction transmission circuit 53, y-direction transmission circuit 55, x-direction receiving circuit 57, y-direction receiving circuit 59, tablet processing device 61 (e.g. processor chip and/or computer chip including firmware), and display 9 with which the tablet is in communication by way of the computer. In the embodiment shown in Fig. 2, each of x-direction loop coils 24-30 and y-direction loop coils 31-42 alternates between electromagnetic wave transmission (or wave generating) and wave detection modes in order to supply power to the tuning circuit in the pointer in the wave generating mode and detect the position of the pointer in the wave detection mode. For example, see embodiments of the specification of the aforesaid '745 patent which is incorporated herein by reference.

Of course, in other embodiments of this invention, the x-direction loop coils may continuously transmit electromagnetic waves to the pointer, and the y-direction loop coils may continuously detect electromagnetic waves from the pointer's tuning circuit when the pointer is proximate the tablet (or vice versa). In such a manner, the position of the pointer on the tablet can be determined and the connection switching circuits 49 and 51 potentially eliminated.

In Figure 2, the tablet's active area is shown by the outline referred to by reference numeral 65. Within active area 65, the position of pointer 17, 19 can be detected to a predetermined degree of accuracy in each of the orthogonal x and y directions. For example, within active area 65, the position of the pointer can be detected in each of the x and y directions at a resolution of at least about 1,000 lines per inch (lpi), preferably at a resolution of at least about 2,000 lpi, and most preferably at a resolution of at least about 2,500 lpi in each of the x and y directions. The detection resolution in active area 65 may or may not be the same in each of the x and y directions in different embodiments of this invention. Such pointer location resolution is obtained in active area 65 because interpolation is performed between adjacent loop coils in the x and/or y directions. For example, the signals detected by 3 to 5 adjacent loop coils may be combined or plugged into an interpolation algorithm to determine the precise position of the pointer when it is located between adjacent loop coils as disclosed in the aforesaid '553 and '745 patents which are incorporated herein by reference. See also U.S. Patent No. 4,999,461, incorporated herein by reference. Multiple loop coils may be needed proximate the pointer for proper interpolation.

However, outside of active area 65, the position of the pointer cannot be determined to the same degree of accuracy in both the x and y directions as inside of the active area. This is because not enough loop coils in both directions are proximate the pointer to adequately interpolate to obtain such accuracy. For example, if the pointer were outside of active area 65 and were positioned at location 67 to the right of active area 65, then vertical or y-direction pointer position could still be detected to approximately the same degree of accuracy as inside of active area 65, using y direction coils 31-42. However, the aforesaid predetermined degree of accuracy of pointer location in the x direction cannot be obtained when the pointer is at location 67, because only one or two loop x-direction loop coils (e.g. coils 24 and 30) are proximate the pointer. Because only two x-direction coils are proximate the pointer, the interpolation algorithm cannot output pointer position in the x-direction to the same degree of desired accuracy as when, e.g., three to five loop coils are proximate the pointer. Thus, within border area 69 adjacent the right hand edge of active area 65, the degree of pointer location accuracy detection in the x direction is relatively less than the x-direction degree of accuracy within active area 65 (while the accuracy of pointer location detection in the y direction remains approximately the same, or does not degrade as quickly as x direction accuracy). The same is true in border area 71 to the left of active area 65. However, in border areas 73 and 75 to the top and bottom of the active area, respectively, the degree of accuracy in the y-direction is relatively less than it is within area 65, while x-direction pointer detection accuracy remains approximately the same as it is within active area 65.

Thus, in border areas 69 and 71 outside of active area 65, y-direction pointer coordinate data is still relatively accurate and useful, although x-direction coordinate data is not. In a similar manner, in border areas 73 and 75 outside of and adjacent active area 65, x-direction pointer coordinate data is still relatively accurate and useful, although y direction coordinate data is not. Thus, in certain embodiments, only the pointer x-direction data from border areas 73 and 75 is output from the tablet and utilized on display 9 as if it was taken at or near the proximate edge of the active area. Also, in these embodiments, only the y-direction data from border areas 69 and 71 is output from the tablet and utilized on the display as if taken at or near a proximate edge of the active area.

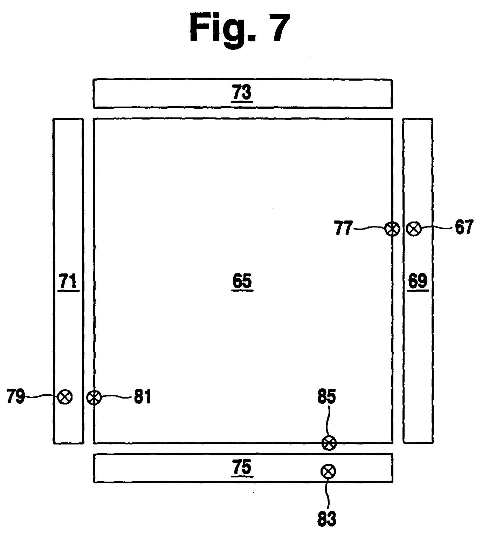

Figure 7 shows the locations of border areas 69, 71, 73 and 75 relative to active area 65 according to certain embodiments of this invention, although the sizes and shapes of the border areas may be adjusted as a function of application desired. The border areas 69-75 are preferably elongated in shape and located immediately adjacent active area 65 in certain embodiments of this invention (border areas 73 and 75 are parallel to one another, as are areas 69 and 71).

In accordance with certain embodiments of this invention, pointer coordinate data which is detected in one or more of border areas 69, 71, 73, and 75 is output from the tablet (via firmware/processor 61 in the tablet) and reported to computer 1 and/or display 9 as if this coordinate data was taken at or near an edge of active area 65 closely adjacent the detected position of the pointer. Thus, for example, referring to Figures 2 and 7, the relatively accurate y-direction coordinate data for a pointer positioned at location 67 within border area 69 is output from the tablet via firmware therein and reported to the computer as if this y-direction coordinate data was taken at the edge of active area 65 at location 77. The tablet's processor or firmware identifies this border area coordinate information and tells the computer that it was taken at the edge of the active area. Thus, useful coordinate data detected in the border area 69 is reported as if it was taken at the most closely adjacent edge of active area 65. In a similar manner, y-direction coordinate data taken at location 79 in border area 71 may be reported to the computer as if it was taken at point 81 which is located at the edge of and within active area 65 closest to point 79. In certain embodiments, only y-direction or vertical coordinates detected in border areas 69 and 71 are forwarded to the computer as if taken along the edge of the active area, and the would-be x coordinate is replaced with an x value corresponding to a location at or near the proximate edge of the active area.

In a similar manner, x-direction coordinate data of the pointer which is taken when the pointer is located at position 83 within bottom border area 75 may be reported to the computer as if it was taken at location 85 which is at an adjacent edge of active area 65. The same can also be done as to x-direction coordinate data taken in upper border area 73. In certain embodiments, only x-direction or lateral/horizontal pointer coordinates detected in borders 73 and 75 are forwarded to the computer as if taken along the edge of the active area. In such a manner, the useful area of digitizer tablet 15 is increased, it becomes much easier for users of the tablet and pointer to select small items appearing near or at the edge of the corresponding computer display screen 9, and users can perform pointer strokes at natural speeds without having to worry about the stroke being cut-off before reaching the edge of the corresponding display 9.

The reporting of useful pointer coordinate data from a border area 69, 71, 73 and 75 as if that data was taken at an adjacent edge of active area 65 effectively enlarges the area on the tablet 15 which may be used to select scroll or menu items that appear on display 9 close to the edge of the display screen. This makes it much easier for a user to, for example, select the upward and downward scroll boxes, move the slideable scroll box up and down along the scroll bar along an edge of the display screen, select menu items appearing along any edge of side of display screen 9, bring up auto-hiding menus or task bars that may be positioned along any edge of the display screen 9, and the like. The areas on tablet 15 for selecting such areas are much larger than in the prior art due to the boarder areas.

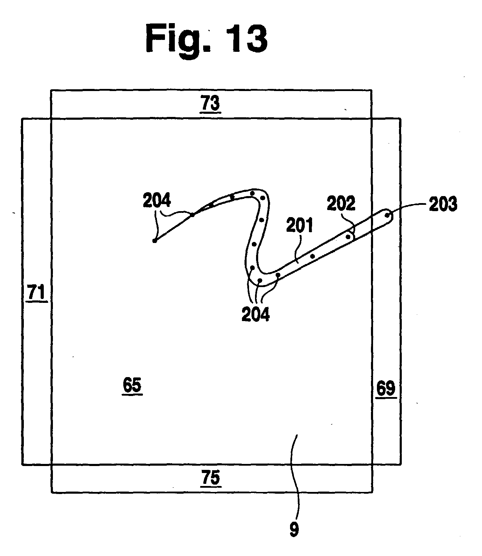

The reporting of coordinate data taken from border areas 69, 71, 73 and 75 which are outside of the active area, as if this data was taken inside of, or at an edge of, active area 65, also enables faster pointer strokes to be performed by the user near edges of active area 65. Some tablets only report coordinate data every one-half inch or so at certain high pointer stroke speeds. Thus, in the prior art, when a fast stroke was performed near an edge of the active area, any data measured outside of the active area was not reported. Thus, reported coordinates of those strokes would often end, up to one-half inch prior to the edge of active area and thus the line would end prior to the edge of display screen 9. See, for example, Figure 13 which illustrates line (e.g paint stroke) appearing on display 9 as drawn with the digitizer pointer over the tablet surface. However, when pointer data detected in a border area 69-75 is reported as if it was taken at the edge of active area 65, then this problem is substantially eliminated and even fast pointer strokes extend all the way to the edge of corresponding display screen 9 when each border area has a width of approximately one-half inch or more.

In certain embodiments of this invention, each border area has a width of at least about 0.1 inches, preferably of at least about 0.3 inches, and most preferably of at least about 0.5 inches. Thus, the line drawn on the display of Fig. 13 would have ended at 202 (i.e. short of the edge of the display) in a conventional digitizer system because pointer location 203 in border area would not have been reported as detected by the tablet. Instead, in accordance with this invention, each of pointer coordinate locations 204 and 203, detected by the conductor grid in the tablet, are output and reported to the computer and/or display 9 so that the drawing of the line simulated by the pointer can be completed on display 9.

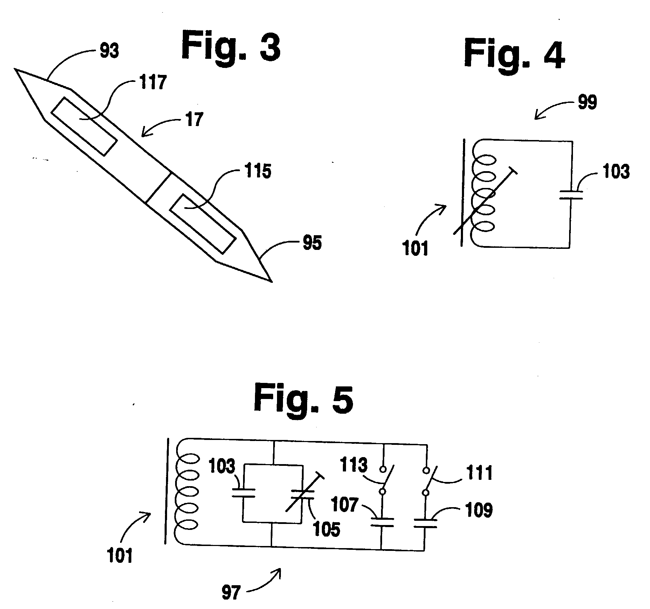

Figure 3 illustrates a cordless digitizing pen or stylus 17 which may be used as a pointer to be navigated across or on tablet 15. The pointer includes an erasing end 93 and a writing end 95. The parallel resonance tuning circuit 97 shown in Figure 5 is provided in the writing tip 95 for enabling the stylus to emit a plurality of different signals (e.g. different frequencies or different digital signals) to indicate switch state and the like. Separate and distinct from writing circuit 97 is eraser tuning circuit 99 of Figure 4 which is provided in erasing tip 93 of pointer 17. In certain other embodiments of this invention, the two circuits are separate but can feed and connect to the same IC for determining pressure data and/or the like. Each tuning circuit 97 and 99 includes an inductive coil 101 and at least one capacitor 103 for storing charge. Additionally, tuning circuit 97 includes variable capacitor 105, capacitors 107 and 109, and switches 111 and 113. Hand manipulatable switches 115 and 117 which are provided on pointer 91, 17 may be used to actuate any of the switches illustrated in the tuning circuits of Figures 4 and 5 in order to select menu items, scroll bars, and the like which appear on computer display screen 9. The functionality of the pointer's tuning circuits is further described in more detail in U.S. Patent Nos. 4,878,553; 5,028,745; and 5,793,360, and U.S. Serial Nos. 08/712,052 and 09/102,382 (filed 6/22/98), all of the disclosures of which are hereby incorporated herein by reference. The pointer thus is preferably not connected to the tablet due to the tuning circuits.

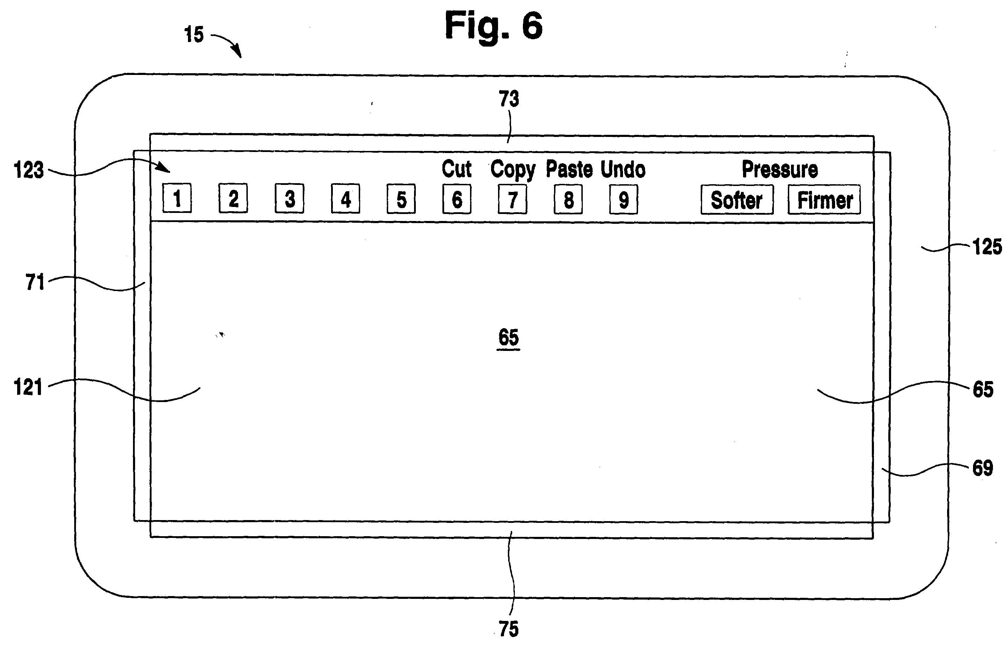

Figure 6 illustrates the outer housing of digitizer tablet 15 according to an exemplary embodiment of this invention. The housing includes work area 121, upper menu strip area 123, and peripheral area 125. Active area 65 as well as elongated border areas 69, 71, 73 and 75 are illustrated in Figure 6 in the positions in which they would appear to a user looking down at the tablet. It is noted that menu strip area 123 may be co-extensive or coexisting with border area 73, or alternatively border area 73 may be located above the menu strip 123 as shown in Figure 6. Thus, in Figure 6, menu strip 123 is in active area 65 as interpreted by the tablet's firmware present in processor 61.

It is also pointed out that in certain embodiments of this invention, useful and accurate coordinate data taken from border areas 69, 71, 73, and 75 may all be reported as if they were taken at or near adjacent edges of the active area. However, in alternative embodiments of this invention, such coordinate data taken from only a single border area (e.g. border area 69), or two border areas, may be reported as if they were taken at or near adjacent edges of the active area, and coordinate data taken from the other border areas may be ignored.

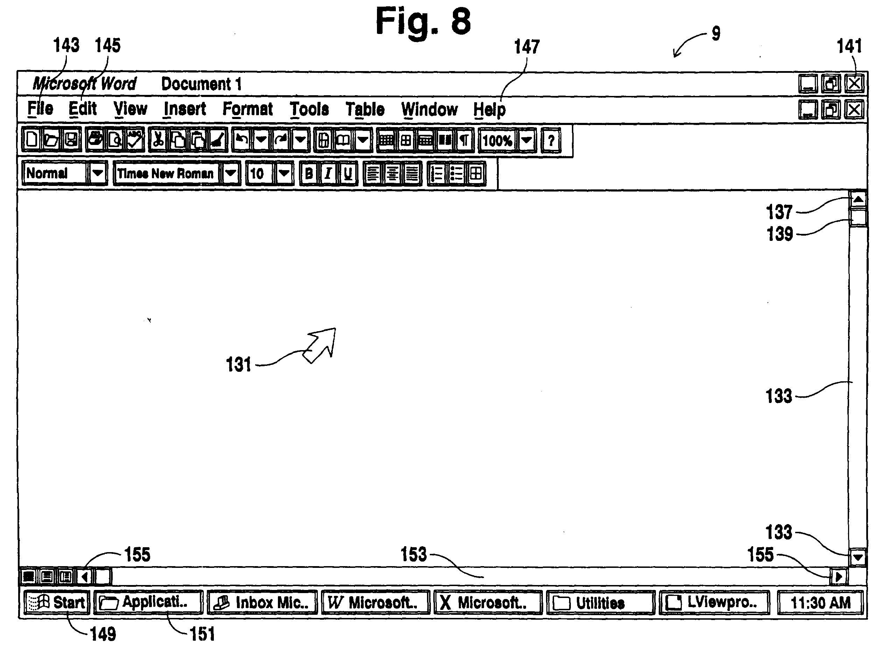

Figure 8 illustrates an image which appears on the screen of display 9 when the digitizer system is in communication therewith, in accordance with an exemplary embodiment of this invention. As shown, arrow-shaped display cursor 131 appears on the display screen and moves in accordance with proportional movement of the pointer on digitizer tablet 15. Cursor 131 is shown in Figure 8 as being located near the center of the display screen. However, right-hand scroll bar 133, right-hand downward scrolling box 135, right-hand upward scrolling box 137 and slidable right-hand scrolling block 139 are all located at the right-hand edge of the display screen. Thus, for a user to select or address any of items 133-139, the user not only can do so by positioning the pointer at the right-hand edge of active area 65, but also can do so by positioning the pointer at an approximate vertical point within right-hand border area 69 (e.g. see Figure 6). This is because at least y-direction pointer locations detected in border area 69 are reported to the computer and/or display 9 as if they were taken at the right-hand edge of active area 65. This enlarges the surface area on tablet 15 which can be used to select items such as 133-139 which appear at an edge of display 9. In certain embodiments of this invention, the user can select and scroll with any of blocks/boxes 135, 137 and 139 by placing the pointer in border area 69 and clicking on same.

However, in other embodiments of this invention, the system may be set up so that only slideable scroll box 139 (moveable up and down within scroll bar 133) and scroll bar 133 are selectable when the pointer is in right hand border area 69. In such embodiments, a way to scroll is to position the pointer over border area 69 at the appropriate vertical location and click on scroll box/block 139 and then move the selected block/box vertically up/down while keeping the pointer tip pressed down - the pointer tip can be up to a half inch above the tablet surface and still be within proximity and control the block/box moving up and down. Alternatively, a user can scroll by clicking on scroll bar 133 on the appropriate side of box 139. The provision of border area 69 enlarges the tablet area within which the pointer must be kept during scrolling in such a manner, so that the user during such scrolling need only keep the point within either border area 69 or within the precise line in the active area representing bar 133.

In a similar manner, still referring to Figure 8, "close" block 141, "file" area 143, "edit" area 145, "help" area 147, and many other selectable areas and/or icons are shown as appearing on display 9 near the top edge of the display screen. In certain embodiments of this invention, when the pointer is placed in top border area 73, the cursor 131 on display 9 appears at the top most edge of the darkened title bar where it says "Microsoft Word....", and thus the items/areas 141, 143, 145, 147 and others near the top of the display cannot be selected via border area 73. However, in other embodiments of this invention, the firmware within the tablet processor, and/or the driver, may be programed so as to output at least some pointer coordinates detected in top border area 73 as if they were taken inside of the active area 65 a predetermined distance interior of the active area's top edge so as to enable areas 141, 143, 145, 147 and the like to be selectable by the user when the pointer is in the appropriate location within the top border area. For example, x-direction pointer coordinate data detected in top border 73 can be output from the tablet and utilized by display 9 as if it was detected at a paint from about 1-50 pixel lines in from the top edge of active area 65.

Still referring to Figure 8, numerous selectable boxes or areas appear near the bottom of display 9, including "start" box 149, "applications" box 151, lateral scrolling bar 153, lateral scrolling boxes 155, and the like. In certain embodiments of this invention, areas 149, 151, 153, and 155 are not selectable when the pointer is over bottom border area 75 because the display cursor 131 at this time appears below such items.
However, in certain other embodiments of this invention, the firmware within the tablet's processor, and/or the tablet's driver, may be programmed so as to report x-direction pointer coordinates detected in bottom border area 75 as if they, or a portion of them, were taken a predetermined distance inside of the active area's bottom outer edge so that it is possible, for example, for the user to select items 149 and 151 (or alternatively items 153, and 155) by positioning the pointer in bottom border area 75 at the appropriate lateral location and clicking on same.

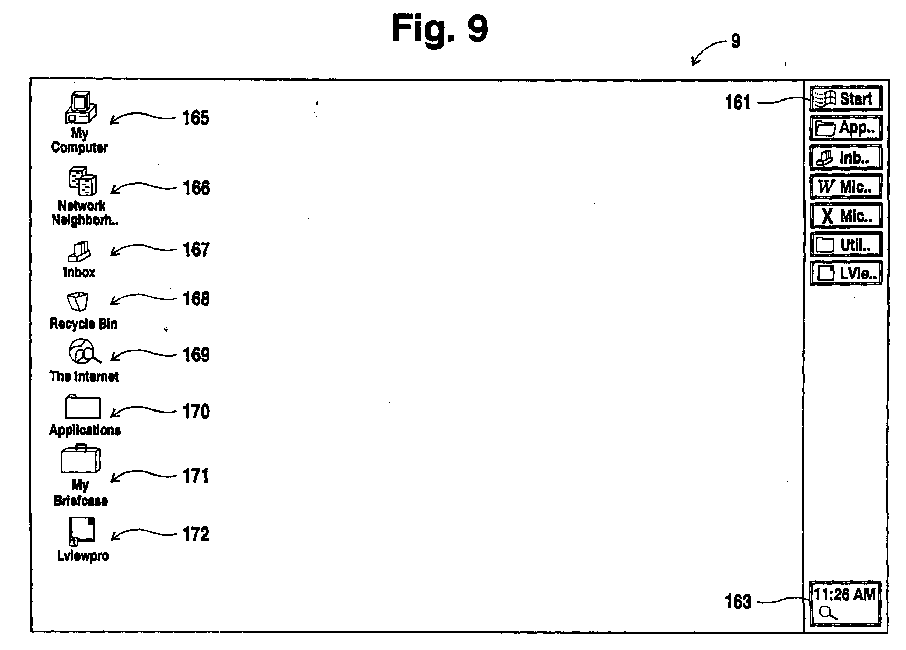

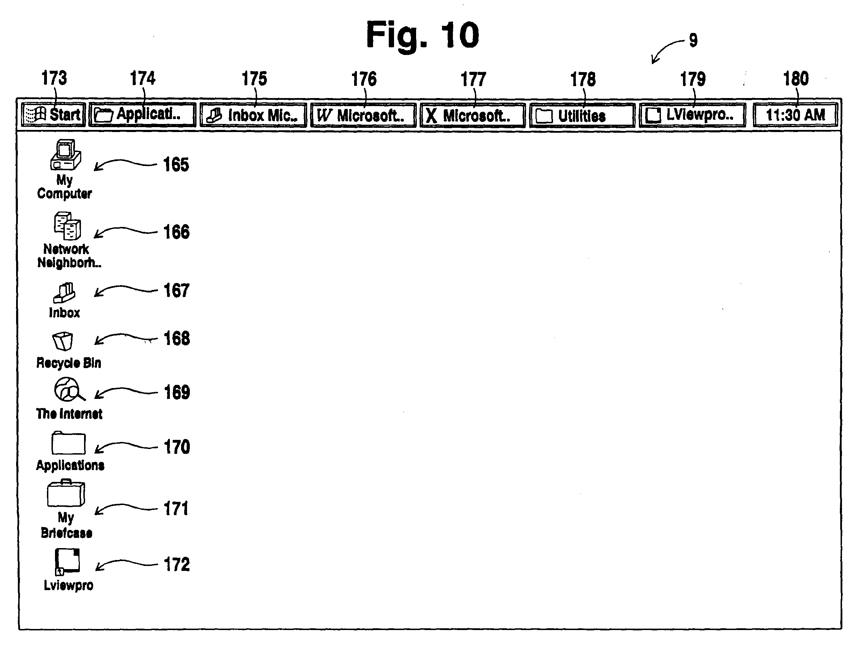

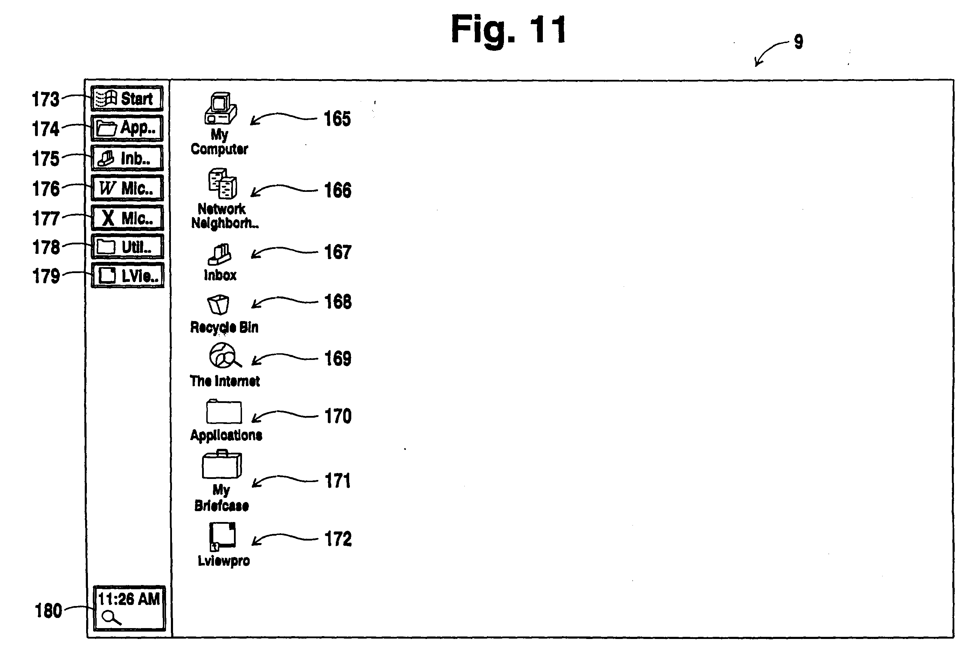

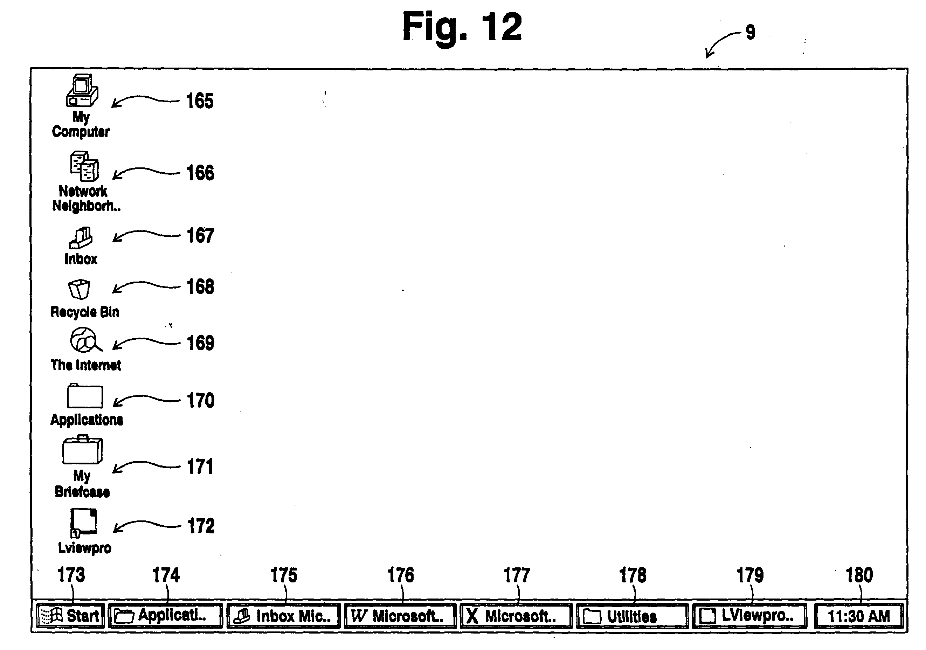

Figure 9 illustrates a display screen wherein numerous items, including "start" box 161, "time" box 163, and the like appear near the right-hand edge of display screen 9, and icons 165-172 appear near the left-hand edge of display screen 9. Figure 10 illustrates yet another display screen 9 which includes selectable icons 165-172 located near the left-hand edge of the display and selectable boxes 173-180 which appear near the top edge of display screen 9. Figure 11 illustrates yet another display screen according to an embodiment of this invention, including selectable icons 165-180 appearing at or near the left-hand edge of the screen. Figure 12 illustrates a display screen according to yet another embodiment of this invention, where selectable icons 165-171 and 173-180 appear at or near edges of the computer's display screen. In certain embodiments of this invention, border area(s) may be used to select slideable scroll box 139 at the right hand edge of display screen, but may not be used to select any of items 141-180. In such embodiments, this may be because these items 141-180 do not appear precisely at the edge(s) of the display 9 screen, and thus pointer coordinates from the border areas are reported as being outside of such items. Thus, to select these items, the user must position the pointer in the proper location in the active area 65 and click on same. Alternatively, the firmware in the tablet's processor or the driver may be programmed so as to not allow coordinates detected from all border areas to be reported, or to not allow border areas to be used to select any of items 141-180.

However, in other embodiments of this invention, the firmware in the tablet's processor or the tablet's driver may be programmed so as to report at least some pointer coordinate(s) detected in certain or all border areas 69, 71, 73 and 75 as if they were taken within active area 65 a predetermined distance(s) inside of the edge thereof (e.g. 10 pixel lines inside of the edge of the active area) closest to the border area in which the pointer coordinate data was detected. In such a manner, the system may be used so as to select any or all of items 141-180 when the pointer is located in and clicked on in appropriate border area(s).

Many Windows '95 or NT users typically want to maximize the available computer display 9 space and set the Windows task bar to "auto-hide" (do a right click onto the task bar, select "properties", select "auto-hide" and then click on "OK"). By doing this, the task bar comes up automatically only when the screen cursor 131 is, for example, at the bottom edge (or any other desirable edge) of the display screen 9. Thus, according to yet another embodiment of this invention, the auto-hiding task bar can be made to appear simply by moving the pointer on the tablet 15 into the appropriate border area 69-75. Figures 9-12 show that the task bar can be positioned at any edge of the display 9, thus justifying in certain embodiments the need to implement the border areas on each side of the tablet's active area 65.

In many applications and operating systems, the outermost edge of the computer display screen 9 may be largely inactive or does not receive or process any input data. If coordinate data from tablet border areas is reported by the tablet 15 at the outermost edge of the display screen, then it is not possible to use the border areas for scrolling or selecting items on Windows' task bar. Thus, when we refer to the edge of the display screen herein, we mean the edge of the data inclusive and manipulatable area on the display screen 9.

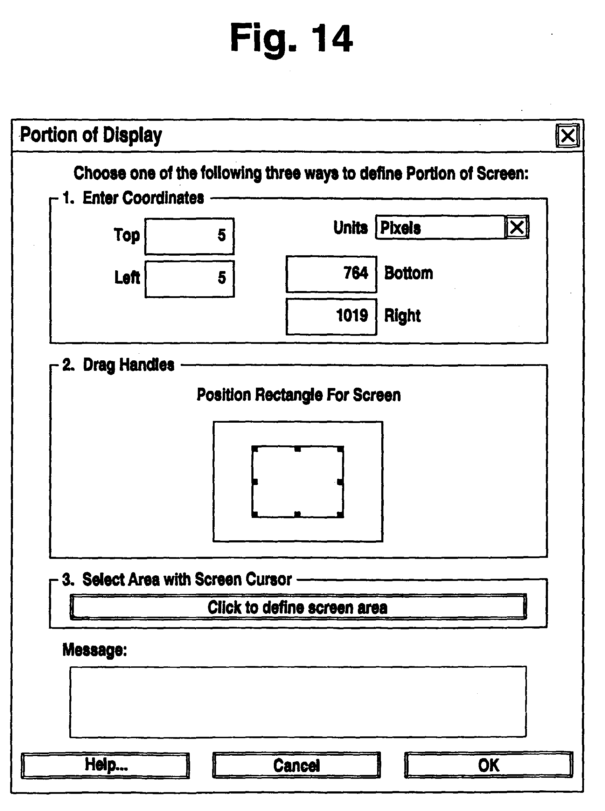

Additionally, a user is able to use the driver control panel to potentially circumvent this as follows. Many digitizer tablet drivers come with a control panel that gives the user the ability to manipulate or adjust the data that the driver sends to the OS in certain ways. This allows the user to customize the feel and behavior of the tablet and input devices (pointers) to their person preferences. In advanced versions of such control panels, the user is typically given a method to adjust the mapping of the tablet, i.e. which portion of the tablet 15 will be mapped to which portion of the display screen 9. By default, the entire active area 65 of the tablet 15 is mapped to the entire screen display area. In the control panel, the user has therefore the chance to change the portion of the display 9 that is accessible with the pointer (i.e. the portion of the display that the screen pointer 131 can be positioned on when the digitizer pointer 17, 19 is moved across the tablet's active area). The user can thus define that the edge of the active area 65 does not coincide with the corresponding edge of the display screen 9, but instead to a line that is spaced a certain distance or a certain number of pixels inside of the edge of the display screen 9 and parallel to it (e.g. see Fig. 14). With this kind of setting, in certain embodiments of this invention, the tablet's border areas 69-75 can be used to select almost any area on the display as a function of which portion of the tablet coincides with the tablet's active area. thus, the tablet's border areas may be used to scroll by clicking in the border area anywhere next to the arrowed scroll boxes 135 and 137, or anywhere next to the scroll bar 133. In the same manner,a selction from the Windows task bar can be made by clicking anywhere in the tablet border area adjacent to the screen 9 position of the item to be selected (e.g. 149, 151).

Once given the above disclosure, many other features, modifications, and improvement will become apparent to the skilled artisan. Such other features, modifications, and improvements are therefore considered to be a part of this invention, the scope of which is to be determined by the following claims:

## Claims

1. A digitizer apparatus comprising:
an electronic writing digitizer tablet including a first group of approximately parallel conductors extending in an x direction and a second group of approximately parallel conductors extending in a y direction, the x and y directions being approximately perpendicular to one another;
a pointer for manipulation by a user over or on said digitizer tablet in order to input pointer coordinate information, said tablet outputting pointer coordinate information so that the pointer may be used in combination with the tablet to move a cursor and select items appearing on said display;
a processor device in said tablet;
said digitizer tablet defining an active area within which at least some of said conductors detect pointer coordinates to at least a first resolution or degree of accuracy in each of said x and y directions;
said digitizer tablet further defining at least one border area located adjacent to but outside of said active area, in which pointer coordinates in at least one of said x and y directions is detected to a resolution or degree of accuracy less than said first resolution or degree of accuracy; and
wherein said processor causes pointer coordinates detected in said border area to be output from the tablet so that said pointer coordinates detected in said border area are utilized by said display as if said pointer coordinates from said border area were detected at or near an edge of said active area proximate a location in said border area where said pointer coordinates were detected.

2. The digitizer apparatus of claim 1, wherein only one border area is provided adjacent said active area, and said one border area is located immediately adjacent one of the right and left hand edges of said active area, and said one border area is approximately elongated in shape.

3. The digitizer apparatus of claim 1, wherein at least first and second different border areas are provided immediately adjacent said active area.

4. The digitizer apparatus of claim 3, wherein y coordinates of the pointer detected in said first border area appear on the display as if they were taken at or near an edge of the active area, and any x coordinates of the pointer which are detected in said first border area are not output from said tablet and do not appear on the display.

5. The digitizer apparatus of claim 4, wherein x coordinates of the pointer detected in said second border area appear on the display as if they were taken at or near an edge of the active area, and any y coordinates of the pointer which are detected in said second border area are not output from said tablet and do not appear on the display.

6. The digitizer apparatus of claim 1, wherein at least first, second, third and fourth border areas are provided adjacent and outside of said active area, and wherein said first and third border areas are approximately parallel to one another and said second and fourth border areas are approximately parallel to one another.

7. The digitizer apparatus of claim 6, wherein only x pointer coordinates, and not y pointer coordinates, detected in said first and third border areas are utilized on the display, and wherein only y pointer coordinates, and not x pointer coordinates, detected in the second and fourth border areas are utilized on the display.

8. The digitizer apparatus of claim 1, wherein each of the first and second groups of conductors includes overlapping loop coils, and wherein the pointer includes a tuning circuit therein, and wherein the pointer is not connected to said tablet.

9. A method of using a digitizer tablet, the method comprising the steps of:
providing a digitizer tablet including an active area and at least one border area that is located outside of but adjacent to the active area;
providing a display with which the digitizer tablet is in operative communication;
providing a pointer which a user manipulates over or on the tablet;
moving the pointer over or on the tablet, the tablet detecting coordinate information of the pointer relative to the tablet;
moving a cursor or drawing a line on the display in a manner corresponding to movement of the pointer over or on the tablet; and
utilizing, on the display, at least some pointer coordinate data detected in the border area as if the pointer coordinate data detected in the border area was detected within the active area.

10. The method of claim 9, further including detecting x and y pointer coordinates inside of the active area at a resolution of at least about 1,000 lines per inch (lpi).

11. The method of claim 10, further including detecting x and y pointer coordinates inside of the active area at a resolution of at least about 2,000 lines per inch, and detecting at least one of x and y pointer coordinates in the border area at a resoltion of less than 2,000 lines per inch.

12. The method of claim 9, further including providing at least first, second, third and fourth border area adjacent the active area, and wherein the first and third border areas are approximately parallel to one another and the second and fourth border areas are approximately parallel to one another.

13. The method of claim 9, further including the display utilizing only y pointer coordinates detected in the one border area, and the display no utilizing any x pointer coordinates detected in the one border area.
